# EUROPÄISCHE PATENTSCHRIFT

(11) **EP 2 009 523 B1**
(45) Veröffentlichungstag und Bekanntmachung des Hinweises auf die Patenterteilung: **14.03.2012**
(21) Anmeldenummer: 08011063.8
(22) Anmeldetag: 18.06.2008
(51) Int. Cl.: G05B 19/042

(54) **Steuerungssystem**
Control system
Système de commande

(30) Priorität: 26.06.2007 DE 102007029423
(43) Veröffentlichungstag der Anmeldung: 31.12.2008
(73) Patentinhaber: SICK AG, 79183 Waldkirch/Breisgau (DE)
(72) Erfinder: Dold, Franz, 78120 Furtwangen (DE); Bornstein, Patrick, 79117 Freiburg (DE); Weddingfeld, Klaus, 79183 Waldkirch (DE); Köpcke, Oliver, 79395 Neuenburg (DE)
(74) Vertreter: Manitz, Finsterwald & Partner GbR

(56) Entgegenhaltungen:
- EP-A- 0 142 112
- EP-A- 1 936 457
- WO-A-01/82668
- DE-A1- 10 240 584

## Beschreibung

Die Erfindung betrifft ein Steuerungssystem, insbesondere ein Sicherheitssteuerungssystem mit wenigstens einem Sensor und wenigstens einem Steuerungsmodul zur Auslesung des wenigstens einen Sensors und zur Erzeugung eines Steuersignals.

Sicherheitssteuerungen werden zum Beispiel eingesetzt, wenn in Abhängigkeit von Sensorsignalen Warnsignale bzw. Aktorsignale generiert werden sollen. Zum Beispiel kann der unerlaubte oder unbefugte Eingriff in den Gefahrenbereich einer Maschine von einem Sensor detektiert werden und einer Steuerung mitgeteilt werden. Die Steuerung erzeugt daraufhin ein Warnsignal bzw. ein Aktorsignal, das zum Beispiel zum sofortigen Stopp der Maschine führt. Entsprechende Sensoren können zum Beispiel durch Lichtschranken oder Lichtgitter gebildet sein.

Das dazu notwendige Steuerungsmodul muss entsprechend konfiguriert werden und die Konfigurationsdaten gespeichert werden.

Bei bekannten Lösungen werden zum Beispiel die Konfigurations- und Programm- und Diagnosedaten des Steuerungsmodules in einer Speicherkarte abgelegt, die typischerweise in einen mechanischen Einschub des Steuerungsmoduls gesteckt wird. Der Anwender erstellt sein gewünschtes Konfigurationsprofil mittels eines Programmiertools eines Personal Computers. Danach werden die Daten entweder über eine Programmierschnittstelle in das Steuerungsmodul übertragen und in der Speicherkarte abgelegt. Alternativ können mittels des Personal Computers die Daten in ein Speicherkartenlese-/ schreibegerät übertragen werden, in dem sich die Speicherkarte befindet. Danach kann der Anwender die Speicherkarte in das Steuerungsmodul stecken. Durch einfachen Wechsel der Speicherkarte kann das Ablaufprogramm der Steuerung sowie die Konfiguration der Ein-/Ausgangsbaugruppen verändert werden.

Die Mobilität der Speicherkarte birgt insbesondere bei Sicherheitsanwendungen ein Sicherheitsrisiko aufgrund der einfachen Manipulation oder beabsichtigten oder unbeabsichtigten Vertauschung. Verwechslung zweier Karten kann zum Einlesen der falschen Konfiguration in das Steuerungsmodul führen, wodurch die Anlage möglicherweise nicht korrekt funktioniert oder es sogar zu sicherheitskritischen Situationen und einer Gefährdung der Gesundheit von Bedienpersonen kommen kann.

DE 198 39 564 A1 beschreibt eine mobile Speichereinheit, die nicht für Sicherheitsanwendungen sondern zum Konfigurieren eines Barcodelesers eingesetzt wird.

Bei einer Sensoreinheit der DE 202 15 631 U1 kann ein einzelner Sensor durch Auswechseln des Eingangs-/Ausgangsmoduls an unterschiedliche Anforderungen angepasst werden und entsprechend konfiguriert werden. Dazu umfasst das Eingangs-/Ausgangsmodul die Auswerteeinheit. Für unterschiedliche Konfigurationen muss daher die gesamte Eingangs/Ausgangseinbaugruppe ausgewechselt werden.

DE 198 31 493 C2 zeigt einen optoelektronischen Sensor, der durch ein entsprechendes Sensorerweiterungsmodul in einem Gehäuseaufsatz, der an einer Steckverbindung des Sensors anschließbar ist, in seiner Funktionalität veränderbar oder erweiterbar ist, wozu zum Beispiel eine zusätzliche Auswerteeinheit in einem Sensorerweiterungsmodul vorgesehen sein kann.

Aus DE 10 2005 049 483 A1 ist ein elektrischer Stecker zur externen Speicherung von Parametern eines Sensors bekannt. Beschrieben ist ein Sensor mit einem integrierten Mikrocontroller, wobei der Sensor einen Steckeranschluss zur Verbindung mit einer Schnittstelle des Sensors aufweist. Der Stecker weist eine elektronische Schaltung auf, die einen Speicher zur Speicherung von Parameterdaten und Kenndaten des Sensors aufweist.

WO 01/82668 A1 beschreibt eine Modulanordnung für Sicherheitsgeräte, die feste Modulplätze aufweist, die über eine feste Verdrahtung mit Ausgangsmodulplätzen verbunden sein können. Ausgangsklemmen eines ersten Sicherheitsschaltgerätes können mit Eingangsklemmen eines folgenden Sicherheitsschaltgerätes verbunden werden. Die Steuerung der Kommunikation geschieht über einen Daten- bzw. Signalbus oder eine optische Verbindung.

EP 0 142 112 beschreibt eine Steuereinrichtung mit einem über ein programmierbares Sensorinterface angeschlossenen Sensor. Das Interface umfasst einen Mikroprozessor und einen Speicher. In dem Speicher können Schwellwerte von Bereichsgrenzen abgelegt sein, die Signalbereiche der Sensoren definieren.

EP 1 912 343 A2, die erst nach dem Prioritätstag der vorliegenden Anmeldung veröffentlicht wurde und insofern Stand der Technik nur nach Artikel 54(3) EPÜ darstellt, beschreibt die Parametrierung einer intelligenten Einheit über eine Spannungsversorgungseinrichtung, wobei ein Kommunikationspfad zur Übermittlung von Konfigurationsdaten zwischen einem Steuerungsmodul und einem Datenspeicherungsmodul über eine Spannungsversorgungsleitung vorgenommen wird.

Aufgabe der vorliegenden Erfindung ist es, ein Steuerungssystem, insbesondere ein Sicherheitssteuerungssystem, anzugeben, bei dem die Konfigurationsdaten möglichst manipulationssicher und kostengünstig gespeichert werden können, und das trotzdem große Flexibilität beim Austausch der Steuerung aufweist.

Diese Aufgabe wird mit einem Steuerungssystem mit den Merkmalen des Anspruchs 1 und ein Verfahren zur Speicherung von Konfigurationsdaten eines Steuerungsmoduls mit den Merkmalen des Anspruchs 14 gelöst. Bevorzugte Ausgestaltungen sind Gegenstand von Unteransprüchen.

Das erfindungsgemäße Steuerungssystem weist einen Sensor und wenigstens ein Steuerungsmodul zur Auslesung des wenigstens einen Sensors auf. Das Steuerungsmodul dient außerdem zur Erzeugung eines Steuersignals. Das Steuerungsmodul weist einen Anschluss für ein Kabel auf, so dass das Steuerungsmodul mit einem Kabel des Steuerungssystems verbindbar ist. Wenigstens ein Datenspeichermodul ist mechanisch mit dem Kabel verbunden und weist eine Datenspeichereinheit zur Ablage von Konfigurationsdaten des Steuerungsmoduls auf. Zur Übermittlung der Konfigurationsdaten zwischen Steuerungsmodul und Datenspeichereinheit ist ein Kommunikationspfad vorgesehen. Das Kabel, mit dem das Datenspeichermodul mechanisch verbunden ist, dient nicht oder nicht ausschließlich zur Übermittlung der Konfigurationsdaten des Steuerungsmoduls. Das Kabel und der Kommunikationspfad entsprechen sich also nicht oder zumindest nicht vollständig.

Die feste Verbindung des Datenspeichermoduls mit dem Kabel kann zum Beispiel durch eine Verschraubung oder Verklebung geschehen. Eine bevorzugte Ausgestaltung sieht vor, dass das Datenspeichermodul einen ersten Anschluss aufweist, mit dem es an dem Kabel angeschlossen ist. Vorteilhafterweise weist das Datenspeichermodul in diesem Fall einen zweiten Anschluss auf, mit dem es an dem Steuerungsmodul angeschlossen werden kann und zwar in einer Weise, dass die elektrische oder elektronische Verbindung zwischen Kabel und Steuerungsmodul über das Datenspeichermodul hergestellt wird, so dass je nach ursprünglichem Zweck bzw. Funktionalität des Kabels zum Beispiel Daten über das Kabel an das Steuerungsmodul übertragen werden können oder die Spannungsversorgung des Steuerungsmodules über das Kabel sichergestellt ist. Das Datenspeichermodul ist dann fest mit einem Kabel des Steuerungsmoduls verbunden. Die Funktion des Kabels, zum Beispiel Datenübermittlung an das Steuerungsmodul oder Spannungsversorgung des Steuerungsmodules, wird bei einer solchen Ausführungsform also durch das Datenspeichermodul "durchgeschaltet", so dass das Datenspeichermodul die ursprüngliche Funktion des Kabels nicht stört.

Wird das Steuerungsmodul ausgetauscht, muss immer zunächst das Kabel mitsamt dem Datenspeichermodul entfernt werden bzw. ausgesteckt werden. Um das Datenspeichermodul auszutauschen, müsste die Verkabelung unterbrochen werden. Eine unbefugte oder unbeabsichtigte Änderung der Konfiguration ist nur mit größerem Aufwand möglich und leicht erkennbar. Trotzdem lässt sich das Steuerungsmodul zum Beispiel bei einem Defekt einfach auswechseln, wobei die Konfiguration in dem Datenspeichermodul erhalten bleibt.

Bei einer solchen Ausgestaltung, bei der das Datenspeichermodul einen zweiten Anschluss aufweist, kann dieser zweite Anschluss auch den Kommunikationspfad zur Übermittlung der Konfigurationsdaten zwischen Steuerungsmodul und Datenspeichereinheit umfassen. In einem solchen Fall dient also der zweite Anschluss zum einen zum Durchschalten der durch das Kabel vorgesehenen Funktionalität (zum Beispiel Datenkommunikation oder Spannungsversorgung) und zum anderen zur Bereitstellung eines Kommunikationspfades zwischen Datenspeichereinheit und Steuerungsmodul.

Eine sichere Ausgestaltung sieht zum Beispiel vor, dass der erste Anschluss des Datenspeichermoduls zum Anschluss an das Kabel eine oder mehrere Schraubverbindungen umfasst. Um das Datenspeichermodul zum Beispiel unbefugterweise auszuwechseln, müssen erst die Schraubverbindungen gelöst werden, was zumindest eine gewisse Zeit in Anspruch nehmen würde.

In einer weiteren Ausführungsform ist vorgesehen, dass das Datenspeichermodul nicht am Ende des Kabels vorgesehen ist. Bei dieser Ausführungsform ist das Datenspeichermodul zwischen das Kabel und ein weiteres Verbindungskabel geschaltet, das zur Verbindung mit dem Steuerungsmodul dient. Auf diese Weise muss sich das Datenspeicherungsmodul nicht in unmittelbarer Nähe des Steuerungsmoduls befinden, so dass für einen unbefugt Manipulierenden die Anordnung unübersichtlicher ist.

Das Steuerungsmodul des erfindungsgemäßen Steuerungssystems dient zum Auslesen von Sensordaten und zur Erzeugung eines Steuersignals. Das Steuersignal kann zum Beispiel ein Warnsignal sein, das eine Bedienperson zum Eingriff in den Betrieb einer mit dem Steuerungssystem gesteuerten Anlage veranlasst. Eine besonders vorteilhafte Ausführungsform sieht vor, dass das Steuerungsmodul selbst zur Bereitstellung von Aktorsteuerungssignalen ausgestaltet ist. Insbesondere kann ein solches Aktorsteuerungssignal zum Stopp einer mit dem Steuerungssystem gesteuerten Anlage dienen. Dementsprechend wird im vorliegenden Text der Begriff "Aktorsteuerungssignal" auch für ein Stoppsignal verwendet.

Bei einer Ausführungsform des erfindungsgemäßen Steuerungssystems, bei dem das Steuerungsmodul auch zur Bereitstellung von Aktorsteuerungssignalen dient, kann das Kabel, mit dem das Datenspeichermodul verbunden ist, auch zur elektrischen bzw. elektronischen Verbindung des Steuerungsmoduls mit wenigstens einem Aktor dienen, so dass zum Beispiel der Aktor von dem Steuerungsmodul angesprochen werden kann.

Bei anderen Ausführungsformen kann das Kabel, mit dem das Datenspeichermodul verbunden ist, zur elektrischen bzw. elektronischen Verbindung des Steuerungsmoduls mit wenigstens einem Sensor dienen, so dass zum Beispiel der Sensor von dem Steuerungsmodul über das Kabel ausgelesen werden kann.

Eine besonders bevorzugte Ausführungsform sieht vor, dass das Kabel, mit dem das Datenspeichermodul verbunden ist, ein Versorgungskabel umfasst, vorzugsweise eine Gerätespannungsversorgungsleitung zur Spannungsversorgung des Steuerungsmoduls.

Eine solche Ausführungsform ist vorteilhaft, da die Gerätespannungsversorgungsleitung zwingend für den Betrieb des Steuerungsmoduls notwendig ist. Es ist somit sichergestellt, dass das Datenspeichermodul, das mit der Gerätespannungsversorgungsleitung verbunden ist, auch bei einem Austausch des Steuerungsmoduls in der Anlage verbleibt.

Die Konfigurationsdaten des Steuerungsmoduls können insbesondere zum Beispiel über eine Datenschnittstelle mittels eines Personal Computers auf das Steuerungsmodul übertragen werden und dann von diesem in die Datenspeichereinheit des Datenspeichermoduls übertragen werden.

Wie beschrieben, können die Konfigurationsdaten über den zweiten Anschluss zwischen dem Steuerungsmodul und dem Datenspeichermodul ausgetauscht werden. Eine vorteilhafte Ausführungsform sieht andererseits vor, dass der Kommunikationspfad zwischen dem Datenspeichermodul und dem Steuerungsmodul eine Funkübertragungseinrichtung in dem Datenspeichermodul umfasst, die mit einer entsprechenden Funkübertragungseinrichtung in dem Steuerungsmodul kommunizieren kann, um auf einfache Weise Konfigurationsdaten zwischen dem Steuerungsmodul und dem Datenspeichermodul austauschen zu können. Eine solche Funkverbindung vereinfacht die Anschlussgeometrie des zweiten Anschlusses, der dann nicht als Kommunikationspfad dient, und verringert die Fehleranfälligkeit zum Beispiel durch Kabelverletzungen.

Eine Funkübertragungseinrichtung kann auch zum Empfangen von Konfigurationsdaten von dem wenigstens einen Sensor und/oder zum Versenden von Konfigurationsdaten an den wenigstens einen Sensor vorgesehen sein. Entsprechend kann auch eine Funkübertragungseinrichtung zur Kommunikation der Konfigurationsdaten von einem und zu einem Aktor vorgesehen sein.

Besonders vorteilhaft ist es, wenn sowohl die Konfigurationsdaten des Steuerungsmoduls, als auch die Konfigurationsdaten des wenigstens einen Sensors und gegebenenfalls vorhandenen Aktors mit Hilfe einer Funkübertragungseinrichtung mit dem wenigstens einen Datenspeichermodul kommunizieren können.

Eine einfache Ausgestaltung sieht vor, dass das Datenspeichermodul zur Funkübertragung ein RFID-tag (radio frequeny identification tag) aufweist, das eine Übertragung nach dem Prinzip der Transpondertechnologie erlaubt.

Das mit dem Steuerungsmodul verbindbare Kabel, das mit dem Datenspeichermodul verbunden ist, kann auch eine Datenkommunikationsleitung umfassen, die zum Austausch von Daten von externen Geräten oder Auswerteeinheiten mit dem Steuerungsmodul dient.

Das Datenspeichermodul kann bei einer solchen Ausgestaltung gleichzeitig zur Festlegung von Adressen dienen, die von der Datenkommunikationsleitung angesprochen werden sollen. Dazu ist bei einer vorteilhaften Ausführungsform an dem Datenspeichermodul eine Eingabemöglichkeit für Adresseinstellungen vorgesehen. Die Eingabemöglichkeit kann zum Beispiel einen oder mehrere Taster umfassen oder durch DIP-Schalter (Dual in-line Package Schalter), wie sie zum Beispiel auf Platinen oder anderen Leiterplatten verwendet werden um bestimmte Grundeinstellungen vorzunehmen, gebildet sein.

Die Datenspeichereinheit eines Datenspeichermoduls eines erfindungsgemäßen Steuerungssystems kann zum Beispiel einen Flashspeicher oder einen EEPROM-Speicher (elektrisch löschbarer, programmierbarer Nur-Lese-Speicher) sein.

Ein besonderer Vorteil des erfindungsgemäßen Steuerungssystems zeigt sich, wenn dieses in einem Schaltschrank angeordnet ist. Die besondere Sicherheit eines solchen Systems wird dabei dadurch noch zusätzlich erhöht, da ein Austausch des Datenspeichermoduls eine Unterbrechung oder ein Austauschen der Verkabelung des Schaltschranks erfordert.

Eine besonders vorteilhafte Weiterbildung des erfindungsgemäßen Steuerungssystems sieht vor, dass nicht nur die Konfigurationsdaten des Steuerungsmoduls, sondern auch Konfigurationsdaten von dem wenigstens einen Sensor und gegebenenfalls vorhandenen Aktoren in dem Datenspeichermodul abgelegt werden können.

Die Erfindung betrifft weiterhin ein Verfahren zum Speichern von Konfigurationsdaten eines Steuerungsmoduls, insbesondere eines Steuerungsmoduls einer Sicherheitssteuerung, mit den Merkmalen des Anspruchs 23. Die Konfigurationsdaten des Steuerungsmoduls werden bei dem erfindungsgemäßen Verfahren in einer Datenspeichereinheit eines Datenspeichermoduls abgelegt, das mechanisch mit einem Kabel des Steuerungsmoduls verbunden ist, wobei das Kabel nicht oder nicht ausschließlich zur Übermittlung des Speicherinhaltes der Datenspeichereinheit zwischen dem Datenspeichermodul und dem Steuerungsmodul vorgesehen ist. Die Vorteile eines solchen Verfahrens ergeben sich in analoger Weise aus der obigen Schilderung der Vorteile eines erfindungsgemäßen Steuerungssystems. Ebenso ergeben sich besondere Ausgestaltungen des erfindungsgemäßen Verfahrens in analoger Weise entsprechend den oben geschilderten besonderen Ausführungsformen des erfindungsgemäßen Steuerungssystems.

Sowohl bei dem erfindungsgemäßen Steuerungssystem als auch bei dem erfindungsgemäßen Verfahren kann vorgesehen sein, dass die Konfigurationsdaten des Steuerungsmodules zusätzlich zu ihrer Speicherung in der Datenspeichereinheit des Datenspeichermodules in einer weiteren Speichereinheit innerhalb des Steuerungsmodules selbst abgelegt sind.

Die Erfindung wird anhand der anliegenden Figuren im Detail erläutert, die beispielhaft erfindungsgemäße Ausführungsformen schematisch darstellen. Dabei zeigen:
- Fig. 1: eine Anordnung einer Ausführungsform eines erfindungsgemäßen Steuerungssystems,
- Fig. 2: eine andere Ausführungsform eines erfindungsgemäßen Steuerungssystems,
- Fig. 3: eine dritte Ausführungsform eines erfindungsgemäßen Steuerungssystems,
- Fig. 4: eine vierte Ausführungsform eines erfindungsgemäßen Steuerungssystems, und
- Fig. 5: das Datenspeichermodul einer weiteren Ausführungsform.

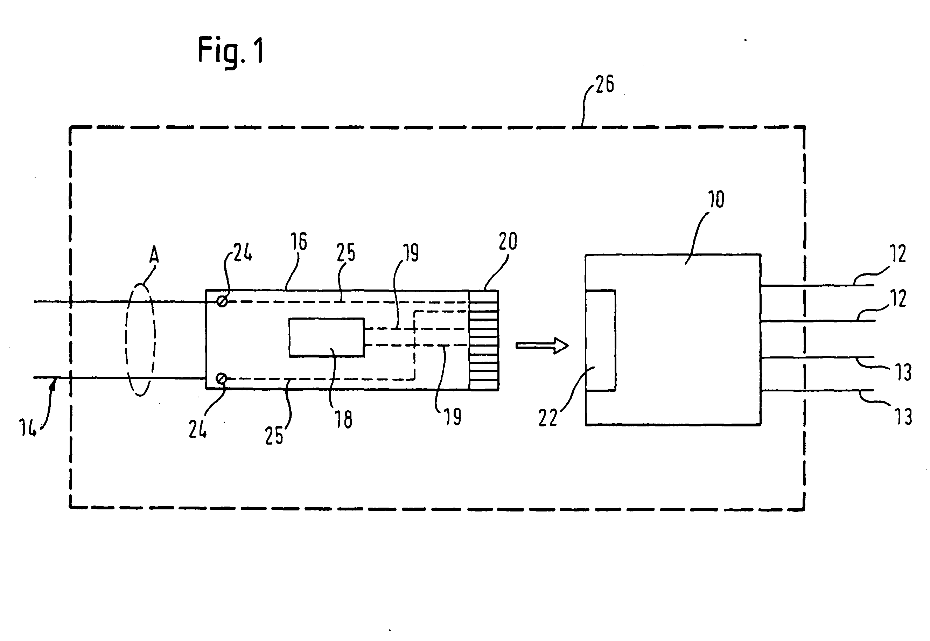

Fig. 1 zeigt ein Steuerungsmodul 10 mit Anschlüssen 12 für Sensoren und Anschlüssen 13 für Aktoren. In nicht gezeigter Weise sind an den Anschlüssen 12 Sensoren angeschlossen, die zum Beispiel einen Gefahrenbereich einer Maschine, zum Beispiel einer Presse, überwachen. Signale dieser Sensoren gelangen zu dem Steuerungsmodul 10 und werden dort ausgewertet, um gegebenenfalls Steuersignale zu generieren, die zum Beispiel über Steuerleitungen 13 an entsprechende, ebenfalls nicht dargestellte Aktoren ausgegeben werden.

Anschluss 14 dient bei dieser Ausführungsform zur Verbindung mit einer Gerätespannungsversorgung. Die gestrichelte Linie A soll andeuten, dass zum Beispiel mehrere Drähte zu einem Kabel 14 zusammengefasst sind. Die Gerätespannungsanschlussleitung 14 ist über Schraubverbindungen 24 mit entsprechenden Anschlussklemmen des Datenspeichermoduls 16 verbunden. Bezugsziffer 16 bezeichnet ein Datenspeichermodul zur Ablage von Konfigurationsdaten des Steuermoduls 10. Dazu weist das Datenspeichermodul 16 eine Datenspeichereinheit 18, zum Beispiel einen Flashspeicher oder einen EEPROM-Speicher auf. Das Datenspeichermodul 16 weist einen Anschlussstecker 20 auf, der in Pfeilrichtung in eine Buchse 22 des Steuerungsmoduls 10 eingesteckt werden kann. Bei dieser Ausführungsform sind die Anschlüsse der Gerätespannungsversorgung 14 innerhalb des Datenspeichermoduls 16 mit entsprechenden Pins des Anschlusssteckers 20 verbunden, um bei in das Steuerungsmodul 10 eingestecktem Datenspeichermodul 16 eine Spannungsversorgung des Steuerungsmoduls 10 zu ermöglichen. Dies wird durch die gestrichelt dargestellten internen Verbindungen 25 angedeutet.

Die Datenspeichereinheit 18 ist über gestrichelt dargestellte interne Verbindungen 19 mit anderen Pins des Anschlusssteckers 20 verbunden, um eine Datenkommunikation mit dem Steuerungsmodul 10 zu ermöglichen.

Das gesamte Steuerungssystem mit dem Steuerungsmodul 10 und dem Datenspeichermodul 16 befindet sich bei dem gezeigten Beispiel in einem schematisch dargestellten Schaltschrank 26.

Diese Ausführungsform kann wie folgt eingesetzt werden. Im Betrieb ist das Datenspeichermodul 16 mit dem Anschlussstecker 20 an die Buchse 22 angekoppelt. Das Steuerungsmodul bezieht seine Betriebsspannung auf diese Weise über die Stecker/Buchsenkombination 20/22 durch das Datenspeichermodul hindurch aus der Gerätespannungsleitung 14.

Konfigurationsdaten des Steuerungsmoduls können zum Beispiel über eine nicht dargestellte Datenschnittstelle mittels eines Personal Computers auf das Steuerungsmodul 10 übertragen werden und dann von diesem in der Datenspeichereinheit 18 des angeschlossenen Datenspeichermoduls 16 abgelegt werden. Das Schreiben von Konfigurationsdaten in die Datenspeichereinheit 18 des Datenspeichermoduls 16 kann zum Beispiel durch einen geeigneten Zugriffsschutz mittels Passwort oder anderen höherwertigen Manipulationsschutzmechanismen geschützt sein. Während des Betriebes können zum Beispiel anfallende Diagnosedaten, wie Fehler oder Anlagenstati, in der Datenspeichereinheit 18 des Datenspeichermoduls 16 gespeichert werden.

Wird das erfindungsgemäße Steuerungssystem dieser Ausführungsform zum Beispiel zur Absicherung des Gefahrenbereiches einer Maschine verwendet, so sind die Sensoranschlüsse 12 mit entsprechenden Sensoren, zum Beispiel Lichtschranken verbunden. Tritt ein unzulässiges Objekt, zum Beispiel ein Körperteil einer Bedienperson, in den Gefahrenbereich ein, so wird dies von einer entsprechend angeordneten Lichtschranke in an sich bekannter Weise detektiert und über die Sensoranschlüsse 12 an das Steuerungsmodul 10 gemeldet. Das Steuerungsmodul 10 generiert ein entsprechendes Aktorsignal, das über die Aktorausgänge 13 des Steuerungsmoduls 10 an die Maschine ausgegeben wird, um diese zum Beispiel zum sofortigen Stopp zu veranlassen.

Im Falle eines Defektes des Steuerungsmoduls 10 muss bei dieser erfindungsgemäßen Ausführungsform nur der Schaltschrank 26 geöffnet werden und das Steuerungsmodul entnommen werden. Die Konfigurationsdaten bleiben auf der Datenspeichereinheit 18 des Datenspeichermoduls 16 gespeichert und können durch Verbindung des Anschlusssteckers 20 mit einem neuen Steuerungsmodul 10 direkt weiter verwendet werden.

Ein unbeabsichtigtes oder beabsichtigtes, aber unbefugtes Auswechseln der Konfigurationsdaten durch Auswechseln des Datenspeichermoduls 16 ist jedoch erschwert. Nach Öffnen des Schaltschranks 26 müsste dazu die Verbindung zwischen dem Datenspeichermodul 16 und dem Steuerungsmodul 10 gelöst werden, wodurch die Stromversorgung des Steuerungsmoduls 10 bereits unterbrochen wäre. Eine entsprechende Unterbrechung der Stromversorgung kann durch ein entsprechendes Warnsignal angezeigt werden. Außerdem müssten die Schraubverbindungen 24 gelöst werden, die das Datenspeichermodul 16 mit der Gerätespannungsversorgungsleitung 14 verbinden. Insgesamt ergibt sich ein größerer Aufwand, das Datenspeichermodul 16 auszutauschen, wodurch ein unbefugtes Austauschen erschwert wird. Ein versehentliches Vertauschen des Datenspeichermoduls 16 beim Austausch des Steuerungsmoduls 10 ist unmöglich, da das Datenspeichermodul 16 mit der Spannungsversorgung des Steuerungsmoduls 10 fest verbunden ist.

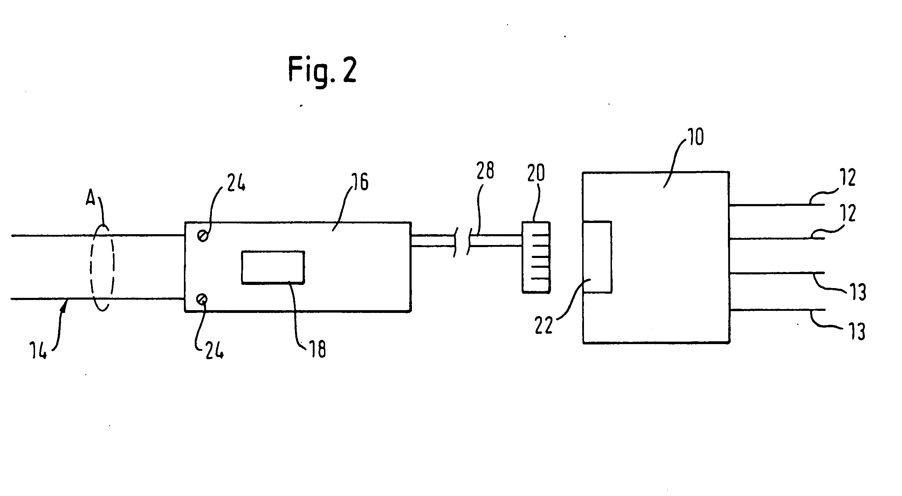

Fig. 2 zeigt eine abgewandelte Ausführungsform. Hier befindet sich zwischen dem Anschlussstecker 20 zur Verbindung des Datenspeichermoduls 16 und mit dem Steuerungsmodul 10 ein Verbindungskabel 28, in dem Leitungen zur Spannungsversorgung und zur Datenübertragung zusammengefasst sind. Die internen Verbindungen des Datenspeichermodules sind hier der Übersichtlichkeit halber nicht dargestellt. Das Datenspeichermodul 16 muss bei dieser Ausführungsform nicht in direkter Nachbarschaft des Steuerungsmoduls 10 angeordnet sein. Auf diese Weise wird insbesondere unbefugtes Austauschen des Datenspeichermoduls 16 erschwert, da die einzelnen Komponenten zunächst lokalisiert werden müssen.

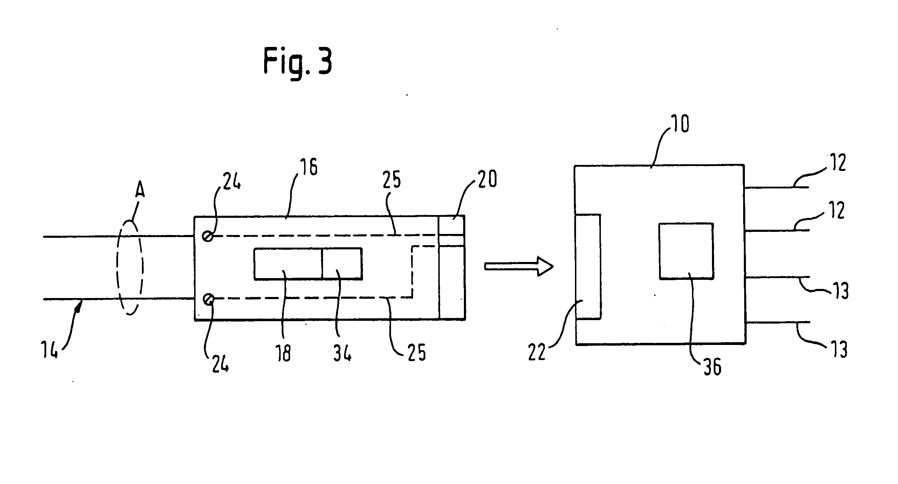

Fig. 3 zeigt eine Ausführungsform, bei der das Datenspeichermodul 16 über ein Funkübertragungsinterface 34, zum Beispiel ein RFID-tag, verfügt. Ein korrespondierendes Funkübertragungsinterface 36 ist in dem Steuerungsmodul 10 vorgesehen. Der Anschlussstecker 20 umfasst hier nur Pins, über die die Gerätespannungsversorgungsleitung 14 über interne Leitungen 25 mit der Buchse 22 des Steuerungsmoduls 10 verbunden werden können. Die Datenübertragung zwischen dem Steuerungsmodul 10 und der Datenspeichereinheit 18 geschieht hingegen über die Funkübertragungsinterfaces 34, 36, die als Transponder wirken. Eine solche Ausführungsform ermöglicht die Verringerung der notwendigen Anzahl kostenintensiver Steckerkontakte durch die Ausnutzung der Funkübertragungsinterfaces.

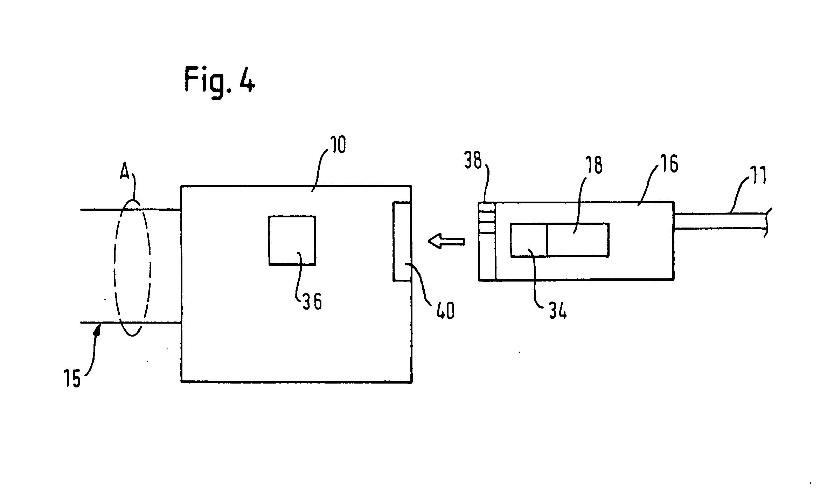

Fig. 4 zeigt eine Ausführungsform, bei der das Datenspeichermodul 16 fest mit einem Sensoranschlusskabel 11 verbunden ist. Bei der gezeigten Ausführungsform werden Daten, die über das Sensorkabel 11 von einem nicht dargestellten Sensor geliefert werden, durch das Datenspeichermodul 16 über nicht gezeigte Verbindungen an die Pins des Anschlusssteckers 38 geliefert, der diese über die Buchse 40 an das Steuerungsmodul 10 weiterleitet. Die Spannungsversorgung des Steuerungsmodules geschieht über die Gerätespannungsversorgungsleitung 15. Konfigurationsdaten des Steuerungsmoduls 10 sind, wie bei den Ausführungsformen der Fig. 1 bis 3 beschrieben, in der Datenspeichereinheit 18 des Datenspeichermoduls 16 abgelegt. Die Übertragung der Konfigurationsdaten von der Datenspeichereinheit 18 zu dem Steuerungsmodul 10 und umgekehrt geschieht bei der gezeigten Ausführungsform über die Funkübertragungsinterfaces 34, 36, wie es bereits für die Ausführungsform der Fig. 3 beschrieben wurde. Zusätzlich können in der Datenspeichereinheit 18 des Datenspeichermoduls 16 Konfigurationsdaten des Sensors abgelegt sein, der mit dem Sensoranschluss 11 verbunden ist. Bei einer nicht gezeigten Ausführungsform befindet sich das Datenspeichermodul 16 nicht in einer Sensoranschlussleitung 11 sondern in einer Aktoranschlussleitung, wobei die Funktionsweise analog ist.

Bereits bei der Herstellung der angeschlossenen Sensoren oder Aktoren können hierbei die optimalen Auswertungen und technischen Daten in der Datenspeichereinheit 18 abgelegt werden. Bei Inbetriebnahme des Sensors bzw. Aktors an dem Steuerungsmodul können diese Daten direkt an das Steuerungsmodul 10 übertragen werden. Die Verwendung von Funkinterfaces zur Kommunikation der Konfigurationsdaten des Steuerungsmoduls 10 erweist sich bei einer solchen Ausführungsform als besonders vorteilhaft, da die an sich bekannten Datenübertragungsprotokolle für die Sensordaten weiter verwendet werden können, die zur Übertragung der Sensordaten von der Sensoranschlussleitung 11 an das Steuerungsmodul 10 verwendet werden und weiterhin über die Steckverbindung des Anschlusssteckers 38 und der Buchse 40 vorgenommen werden können.

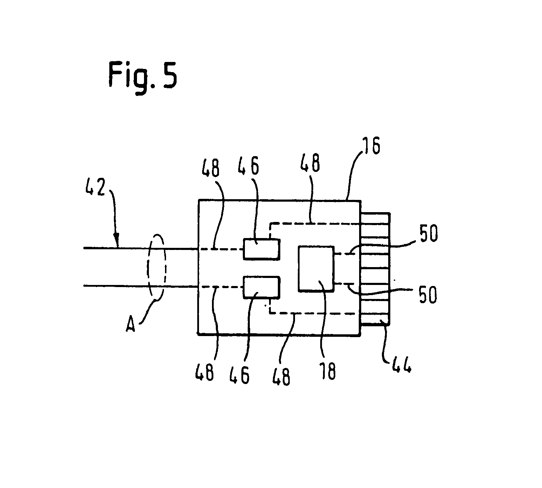

Ein Detail einer weiteren Ausführungsform ist in Fig. 5 gezeigt. Hier ist das Datenspeicherungsmodul 16 mit der Datenspeichereinheit 18 mechanisch fest mit einer Kommunikationsverbindung 42 verbunden. Die Kommunikationsverbindung 42 dient zum Beispiel zur Datenübertragung von einem Sensor zu einem Steuerungsmodul, wie es auch in der Ausführungsform der Fig. 4 erläutert ist. Es kann sich aber auch um eine andere Kommunikationsverbindung zu einer anderen Peripherieeinheit handeln.

An den Pins des Anschlusssteckers 44 liegen bei dieser Ausführungsform interne Verbindungen mit den Datenleitungen 42 einerseits (gestrichelte Linien 48) und interne Verbindungen mit der Datenspeichereinheit 18 andererseits (gestrichelte Linien 50) an. Mit 46 sind Adressierungstaster bezeichnet, mit denen es in an sich bekannter Weise möglich ist, den Daten, die über die Datenleitungen 42, 46 übertragen werden, entsprechende Adressen zuzuordnen. Bei dieser Ausführungsform wird das Datenspeichermodul 16 also nicht nur zur Speicherung der Konfigurationsdaten des hier nicht dargestellten Steuerungsmoduls 10 verwendet, sondern in Erweiterung der Funktionalität auch zur Adressierung der Datenleitungen 42. Auch hier kann abweichend von der Darstellung in Figur 5 vorgesehen sein, dass die Datenübertragung zwischen der Datenspeichereinheit 18 und dem Steuerungsmodul mit Hilfe von Funkinterfaces vorgenommen wird, wie sie für die Ausführungsformen der Figuren 3 und 4 beschrieben sind.

Ebenso wie es beispielhaft für die Ausführungsform der Fig. 1 gezeigt ist, befinden sich auch die Steuerungsmodule 10 und die Datenspeicherungsmodule 16 der Ausführungsformen der Fig. 2 bis 5 vorteilhafterweise in einem Schaltschrank.

Bei einer nicht gezeigten Ausführungsform ist das Datenspeichermodul an dem Kabel, also zum Beispiel an der Gerätespannungsversorgungsleitung 14 oder einer Datenkommunikationsleitung 42, nur außen mechanisch befestigt, ohne dass dieses Kabel in das Datenspeichermodul führt. Die Befestigung kann zum Beispiel durch eine Verklebung oder Anschraubung mit einer Klemme geschehen. Die Übertragung der Konfigurationsdaten zwischen der Datenspeichereinheit des Datenspeichermodules und dem Steuerungsmodul geschieht dann über Funkinterfaces oder eine gesonderte Steckerverbindung.

### Bezugszeichenliste

- 11, 12: 10 Steuerungsmodul Sensoranschluss
- 13: Aktoranschluss
- 14, 15: Gerätespannungsleitung
- 16: Datenspeichermodul
- 18: Datenspeichereinheit
- 19: interne Verbindung
- 20: Anschlussstecker
- 22: Buchse
- 24: Schraubverbindung
- 25: interne Verbindung
- 26: Schaltschrank
- 28: Verbindungskabel
- 34, 36: Funkübertragungsinterface
- 38: Anschlussstecker
- 40: Buchse
- 42: Kommunikationsleitung
- 44: Anschlussstecker
- 46: Adressierungstaster
- 48, 50: interne Verbindung

- A: Andeutung der Zusammenfassung von Drähten zu einem Kabel

## Patentansprüche

1. Steuerungssystem mit
- wenigstens einem Sensor;
- wenigstens einem Steuerungsmodul (10) zur Auslesung des wenigstens einen Sensors und zur Erzeugung eines Steuersignals, wobei das wenigstens eine Steuerungsmodul (10) wenigstens einen Anschluss (22, 40) für ein Kabel (11, 14, 42) aufweist;
- wenigstens einem mit dem Steuerungsmodul (10) lösbar verbindbaren Kabel (11, 14, 42);
- wenigstens einem Datenspeichermodul (16), das mechanisch mit dem mit dem Anschluss (22, 40) zu verbindenden Kabel (11, 14, 42) verbunden ist und eine Datenspeichereinheit (18) zur Speicherung von Konfigurationsdaten des wenigstens einen Steuerungsmoduls (10) umfasst; und
- einem Kommunikationspfad (19, 34, 36) zur Übermittlung von Konfigurationsdaten zwischen dem wenigstens einen Steuerungsmodul (10) und dem wenigstens einen Datenspeichermodul (16);
wobei das Steuerungssystem derart ausgestaltet ist, dass bei Lösung der Verbindung zwischen dem wenigstens einen Steuerungsmodul (10) und dem Kabel (11, 14, 42) auch die Lösung der Verbindung zwischen dem Steuerungsmodul (10) und dem Datenspeicherungsmodul (16) bewirkt wird; und
wobei
- das Kabel (11) das Steuerungsmodul (10) mit wenigstens einem Aktor verbindet, oder
- das Kabel (11) zur Verbindung des Steuerungsmoduls (10) mit wenigstens einem Sensor dient, oder
- das Kabel ein Versorgungskabel (14) umfasst, wobei der Kommunikationspfad (19, 34, 36) getrennt von den Versorgungsleitungen vorgesehen ist.

2. Steuerungssystem nach Anspruch 1, bei dem das Datenspeichermodul (16) einen ersten Anschluss (24) zum Anschluss an das Kabel (14) umfasst.

3. Steuerungssystem nach Anspruch 2, bei dem das Datenspeichermodul (16) einen zweiten Anschluss (20, 38, 44) zum Anschluss an das Steuerungsmodul (10) umfasst, derart, dass die elektrische bzw. elektronische Verbindung zwischen Kabel (11, 14, 42) und Steuerungsmodul (10) über das Datenspeichermodul (16) hergestellt wird.

4. Steuerungssystem nach Anspruch 3, bei dem der erste Anschluss eine oder mehrere Schraubverbindungen (24) umfasst und/oder der zweite Anschluss (20, 38, 44) ein oder mehrere Steckverbindungen umfasst.

5. Steuerungssystem nach einem der Ansprüche 3 oder 4, bei dem der zweite Anschluss (20) wenigstens ein Verbindungskabel (28) umfasst, das derart ausgestaltet ist, dass das an das Steuerungsmodul (10) angeschlossene Datenspeichermodul (16) entfernt von dem Steuerungsmodul (10) vorgesehen sein kann.

6. Steuerungssystem nach einem der Ansprüche 1 bis 5, bei dem das Steuerungsmodul (10) zur Bereitstellung von Aktorsteuerungssignalen ausgestaltet ist.

7. Steuerungssystem nach einem der Ansprüche 1 bis 6, bei dem der Kommunikationspfad eine Funkübertragungseinrichtung (34) im Datenspeichermodul (16) zum Empfangen von Konfigurationsdaten von dem Steuerungsmodul (10) und/oder zum Versenden von Konfigurationsdaten an eine Funkübertragungseinrichtung (36) des Steuerungsmoduls (10) umfasst.

8. Steuerungssystem nach einem der Ansprüche 1 bis 7, bei dem die wenigstens eine Datenspeichereinheit (18) zur Speicherung von Konfigurationsdaten weiterer angeschlossener Geräte ausgestaltet ist.

9. Steuerungssystem nach Anspruch 8, bei dem das Datenspeichermodul (16) eine Funkübertragungseinrichtung zum Empfangen von Konfigurationsdaten von wenigstens einem Aktor und/oder zum Versenden von Konfigurationsdaten an wenigstens einen Aktor umfasst.

10. Steuerungssystem nach einem der Ansprüche 7 bis 9, bei dem das Datenspeichermodul (16) ein RFID-tag (34) zur Funkübertragung umfasst.

11. Steuerungssystem nach einem der Ansprüche 1 bis 10, bei dem das Kabel eine Datenkommunikationsleitung (42) umfasst.

12. Steuerungssystem nach Anspruch 11, bei dem das Datenspeichermodul (16) wenigstens eine Eingabemöglichkeit (46) umfasst.

13. Steuerungssystem nach einem der Ansprüche 1 bis 12, bei dem die Datenspeichereinheit (18) einen Flash-Speicher oder einen EEPROM-Speicher umfasst,
und/oder bei dem sich das Steuerungsmodul (10) in einem Schaltschrank (26) befindet,
und/oder bei dem das Steuerungsmodul (10) zur Erzeugung eines Steuersignals ausgestaltet ist, das ein Aktorsignal und/oder ein Warnsignal umfasst.

14. Verfahren zum Speichern von Konfigurationsdaten eines Steuerungsmoduls (10) unter Verwendung eines Steuerungssystems gemäß einem der Ansprüche 1 bis 13, bei dem die Konfigurationsdaten des Steuerungsmoduls (10) in einer Datenspeichereinheit (18) eines Datenspeichermoduls (16) abgelegt werden, das mechanisch mit einem Kabel (11, 14, 42) zum Anschluss an das Steuerungsmodul (10) verbunden ist,
wobei bei Lösung der Verbindung zwischen dem wenigstens einen Steuerungsmodul (10) und dem Kabel (11, 14, 42) auch die Lösung der Verbindung zwischen dem Steuerungsmodul (10) und dem Datenspeicherungsmodul (16) bewirkt wird, und wobei
- das Kabel (11) zur Verbindung des Steuerungsmoduls (10) mit wenigstens einem Aktor verwendet wird, oder
- das Kabel (11) zur Verbindung des Steuerungsmoduls (10) mit wenigstens einem Sensor verwendet wird, oder
- das Kabel (14) zur Versorgung verwendet wird, wobei Konfigurationsdaten zwischen dem Steuerungsmodul (10) und dem wenigstens einen Datenspeichermodul (16) über Versorgungsleitungen übermittelt werden, die getrennt von dem Kommunikationspfad (19, 34, 36) sind.

## Claims

1. A control system comprising
at least one sensor;
- at least one control module (10) for the reading out of the at least one sensor and for the generation of a control signal, wherein the at least one control module (10) has at least one connection (22, 40) for a cable (11, 14, 42);
- at least one cable (11, 14, 42) releasably connectable to the control module (10);
- at least one data memory module (16) which is mechanically connected to the cable (11, 14, 42) to be connected to the connection (22, 40) and includes a data memory unit (18) for the storage of configuration data of the at least one control module (10); and
- a communications path (19, 34, 36) for the transfer of configuration data between the at least one control module (10) and the at least one data memory module (16),
wherein the control system is designed such that, when the connection between the at least one control module (10) and the cable (11, 14, 42) is released, the release of the connection between the control module (10) and the data memory module (16) is also effected; and
wherein
- the cable (11) connects the control module (10) to at least one actuator; or
- the cable (11) serves for connecting the control module (10) to at least one sensor; or
- the cable includes a supply cable (14), with the communications path (19, 34, 36) being provided separate from the supply lines.

2. A control system in accordance with claim 1, wherein the data memory module (16) includes a first connection (24) for the connection to the cable (14).

3. A control system in accordance with claim 2, wherein the data memory module (16) includes a second connection (20, 38, 44) for connection to the control module (10) such that the electrical or electronic connection between the cable (11, 14, 42) and the control module (10) is established via the data memory module (16).

4. A control system in accordance with claim 3, wherein the first connection includes one or more screw connections (24) and/or the second connection (20, 38, 44) includes one or more plug connections.

5. A control system in accordance with claim 3 or claim 4, wherein the second connection (20) includes at least one connection cable (28) which is configured such that the data memory module (16) connected to the control module (10) can be provided remote from the control module (10).

6. A control system in accordance with any one of the claims 1 to 5,
wherein the control module (10) is configured for the provision of actuator control signals.

7. A control system in accordance any one of the claims 1 to 6, wherein the communications path includes a radio transmission device (34) in the data memory module (16) for the reception of configuration data from the control module (10) and/or for the sending of configuration data to a radio transmission device (36) of the control module (10).

8. A control system in accordance any one of the claims 1 to 7, wherein the at least one data memory unit (18) is configured for the storage of configuration data of further connected devices.

9. A control system in accordance with claim 8, wherein the data memory module (16) includes a radio transmission device for the reception of configuration data from at least one actuator and/ or for the sending of configuration data to at least one actuator.

10. A control system in accordance any one of the claims 7 to 9, wherein the data memory module (16) includes an RFID tag for radio transmission.

11. A control system in accordance any one of the claims 1 to 11,
wherein the cable includes a data communication line (42).

12. A control system in accordance with claim 11, wherein the data memory module (16) includes at least one input possibility (46).

13. A control system in accordance any one of the claims 1 to 12,
wherein the data memory unit (18) includes a flash memory or an EEPROM memory;
and/or wherein the control module (10) is located in a switch cabinet (26);
and/or wherein the control module (10) is configured for the generation of a control signal which includes an actuator signal and/or a warning signal.

14. A method for the storage of configuration data of a control module (10) using a control system in accordance with any one of the claims 1 to 13, wherein the configuration data of the control module (10) are stored in a data memory unit (18) of a data memory module (16) which is mechanically connected to a cable (11, 14, 42) for connection to the control module (10),
wherein, when the connection between the at least one control module (10) and the cable (11, 14, 42) is released, the release of the connection between the control module (10) and the data memory module (16) is also effected; and wherein
- the cable (11) is used for connecting the control module (10) to at least one actuator; or
- the cable (11) is used for connecting the control module (10) to at least one sensor; or
- the cable (14) is used for supply, with configuration data being transferred between the control module (10) and the at least one data storage module (16) via supply lines which are separate from the communications path (19, 34, 36).

## Revendications

1. Système de commande, comprenant
- au moins un capteur ;
- au moins un module de commande (10) pour la lecture dudit au moins un capteur et pour générer un signal de commande, tel que ledit au moins un module de commande (10) comprend au moins une connexion (22, 40) pour un câble (11, 14, 42) ;
- au moins un câble (11, 14, 42) susceptible d'être relié de façon détachable au module de commande (10) ;
- au moins un module de mémoire de données (16) qui est relié mécaniquement au câble (11, 14, 42) à connecter à la connexion (22,40) et qui comprend une unité de mémoire de données (18) pour mémoriser des données de configuration dudit au moins un module de commande (10) ; et
- un trajet de communication (19, 34, 36) pour la transmission de données de configuration entre ledit au moins un module de commande (10) et ledit au moins un module de mémoire de données (16) ;
dans lequel le système de commande est conçu de telle façon que lors du détachement de la liaison entre ledit au moins un module de commande (10) et le câble (11, 14, 42), cela entraîne également le détachement de la liaison entre le module de commande (10) et le module de mémoire de données (16) ; et
dans lequel
- le câble (11) relie le module de commande (10) à au moins un actionneur, ou
- le câble (11) sert à la liaison du module de commande (10) avec ledit au moins un capteur, ou
- le câble comprend un câble d'alimentation (14), et le trajet de communication (19, 36, 34) est prévu séparément des lignes d'alimentation.

2. Système de commande selon la revendication 1, dans lequel le module de mémoire de données (16) comprend une première connexion (24) pour la connexion avec le câble (14).

3. Système de commande selon la revendication 2, dans lequel le module de mémoire de données (16) comprend une seconde connexion (20, 38, 44) pour la connexion sur le module de commande (10), de telle façon que la liaison électrique ou électronique entre le câble (11, 14, 42) et le module de commande (10) est établie via le module de mémoire de données (16).

4. Système de commande selon la revendication 3, dans lequel la première connexion comprend une ou plusieurs liaisons vissées (24) et/ou la seconde connexion (20, 38, 44) comprend une ou plusieurs liaisons enfichées.

5. Système de commande selon l'une des revendications 3 ou 4, dans lequel la seconde connexion (20) comprend au moins un câble de liaison (28) qui est conçu de telle façon que le module de mémoire de données (16) raccordé au module de commande (10) peut être prévu à distance du module de commande (10).

6. Système de commande selon l'une des revendications 1 à 5, dans lequel le module de commande (10) est conçu pour préparer des signaux de commande d'actionneurs.

7. Système de commande selon l'une des revendications 1 à 6, dans lequel le trajet de communication comprend un système de transmission radio (34) dans le module de mémoire de données (16) pour recevoir des données de configuration depuis le module de commande (10) et/ou pour envoyer des données de configuration à un système de transmission radio (36) du module de commande (10).

8. Système de commande selon l'une des revendications 1 à 7, dans lequel ladite au moins une unité de mémoire de données (18) est conçue pour mémoriser des données de configuration d'autres appareils connectés.

9. Système de commande selon la revendication 8, dans lequel le module de mémoire de données (16) comprend un système de transmission radio pour recevoir des données de configuration d'au moins un actionneur et/ou pour émettre des données de configuration vers au moins un actionneur.

10. Système de commande selon l'une des revendications 7 à 9, dans lequel le module de mémoire de données (16) comprend une étiquette RFID (34) pour la transmission radio.

11. Système de commande selon l'une des revendications 1 à 10, dans lequel le câble comprend une ligne de communication de données (42).

12. Système de commande selon la revendication 11, dans lequel le module de mémoire de données (16) comprend au moins une possibilité de saisie (46).

13. Système de commande selon l'une des revendications 1 à 12, dans lequel l'unité de mémoire de données (18) comprend une mémoire flash ou une mémoire EEPROM,
et/ou dans lequel le module de commande (10) est situé dans une armoire de commutation (26),
et/ou dans lequel le module de commande (10) est conçu pour générer un signal de commande qui inclut un signal d'actionneur et/ou un signal d'avertissement.

14. Procédé pour mémoriser des données de configuration d'un module de commande (10) en utilisant un système de commande selon l'une des revendications 1 à 13, dans lequel les données de configuration du module de commande (10) sont déposées dans une unité de mémoire de données (18) d'un module de mémoire de données (16) qui est relié mécaniquement à un câble (11, 14, 42) pour la connexion au module de commande (10),
dans lequel lors du détachement de la liaison entre ledit au moins un module de commande (10) et le câble (11, 14, 42), cela entraîne également le détachement de la liaison entre le module de commande (10) et le module de mémoire de données (16), et dans lequel
- le câble (11) est utilisé pour la liaison du module de commande (10) avec au moins un actionneur, ou
- le câble (11) est utilisé pour la liaison du module de commande (10) avec au moins un capteur, ou
- le câble (14) est utilisé pour l'alimentation, et des données de configuration sont transmises entre le module de commande (10) et ledit au moins un module de mémoire de données (16) via des lignes d'alimentation qui sont séparées du trajet de communication (19, 34, 36).
